# EUROPÄISCHE PATENTANMELDUNG

(11) **EP 2 090 958 A1**
(43) Veröffentlichungstag der Anmeldung: **19.08.2009**
(21) Anmeldenummer: 09001809.4
(22) Anmeldetag: 10.02.2009
(51) Int. Cl.: G06F 1/26, H04B 3/54

(54) **Netzteil mit Datenschnittstelle**

(30) Priorität: 16.02.2008 DE 102008009542
(71) Anmelder: Hw-Elektronik GmbH, 22041 Hamburg (DE)
(72) Erfinder: Schrader, Patrick, 22045 Hamburg (DE); Bier, Arne, 20146 Hamburg (DE)
(74) Vertreter: Groth, Wieland

(57) **Zusammenfassung**

Die Erfindung betrifft ein Integriertes Netzteil (1) zum Einbau in einen Computer mit einem Gehäuse (3) und mit einem Hausspannungsanschluss (6) und mit wenigstens einem Niedrigspannungsanschluss (12) für Bauteile des Computers und einer zwischen dem Hausspannungsanschluss (6) und dem wenigstens einen Niedrigspannungsanschluss (12) in dem Gehäuse (3) geschalteten Transformatoreinrichtung, mit einer im Gehäuse (3) angeordneten und zwischen einer Hausspannungsschnittstelle (14) und einer Netzwerkschnittstelle (16) geschalteten HomePlug-Schaltung (13), wobei die Hausspannungsschnittstelle (14) unmittelbar mit dem Hausspannungsanschluss (6) elektrisch leitend verbundenen ist und die Netzwerkschnittstelle (16) außerhalb des Gehäuses (3) angeordnet ist.

## Beschreibung

Die Erfindung betrifft ein integriertes Netzteil für einen Computer nach dem Oberbegriff des Anspruchs 1.

Netzteile für Computer sind im Stand der Technik hinlänglich bekannt. Netzteile weisen üblicherweise als zentralen Baustein einen Transformator auf, der die herkömmliche Mittelspannung eines Hausstromnetzes von 100 Volt bis 230 Volt auf die zur Versorgung von Computerbausteinen gebräuchlichen Spannungen zwischen 3 Volt und 12 Volt herunter transformiert.

Zur Vernetzung von Netzwerkhosts sind kabelgebundene und kabellose Netzwerktechnologien bekannt. Computer können zum einen mittels Patchkabeln über RJ45-Schnittstellen miteinander vernetzt werden. Hierzu werden an den RJ45-Port auf der Netzwerkkarte des Computers Patchkabel gesteckt und diese zum nächsten Verteilerpunkt geführt. Dort wird ein weiteres Patchkabel gesteckt und zum nächsten Computer mit entsprechender RJ45-Schnittstelle geführt. Auf diese Weise ist ein LAN über Patchkabel herstellbar. Es ist auch bekannt, zwei PCs direkt durch ein Patchkabel zu verbinden.

Daneben sind WLAN Verbindungen bekannt, die ein drahtloses Funknetz aufspannen. Anstatt Daten über ein Patchkabel zu übertragen, dient die Luft als Übertragungsmedium und als Schnittstelle, die sich per Funk nutzbar machen lässt.

Seit einiger Zeit ist eine kabelgebundene Übertragung von Daten auch über ein Stromkabel möglich, die als so genannte Powerlinecommunication (PLC) bezeichnet wird. Besonders bietet sich die Möglichkeit der Heimvernetzung über vorhandene Stromleitungen im Haus. PLC ist kostengünstig und komfortabel, da zum einen kurze Kabellängen benötigt werden und zum anderen PLC gegenüber WLAN abhörsicherer ist. Bei PLC werden Steckdosenadapter mit RJ45-Schnittstellen direkt in Steckdosen des Hausstromnetzes eingesteckt und aus der RJ45-Schnittstelle wird ein kurzes Patchkabel zum zu vernetzenden Computer geführt. Ein anderer Steckdosenadapter ist in eine andere Steckdose gesteckt und mit einem anderen Netzwerkhost über Patchkabel verbunden. Über die Powerline werden Daten zwischen den beiden Netzwerkhosts über die beiden Steckdosenadapter ausgetauscht. Die über das Hausstromnetz übertragenden Daten werden im Frequenzbereich von 4,3 MHz bis 20,9 MHz auf die Stromleitung mittels einer OFDM-Modulation aufmoduliert.

Bekannte Steckdosenadapter sind in der DE 10 2004 058 266 B4 und durch sie aufgebaute Netzwerke in der DE 10 2004 001 460 B3 beschrieben. Die dort offenbarten bekannten HomePlug-Adapter erlauben die Integration von Netzwerkgeräten, die IEEE 802.3 Standard entsprechen. Nachteilig an PLC ist, dass jeder Computer zwei Steckdosen benötigt. Zum einen muss die Stromversorgung über eine Steckdose und zum anderen muss die Datenübertragung über eine zweite Steckdose mit HomePlug-Adapter erfolgen. Nachteiligerweise sind damit auch für jeden Computer ein Stromkabel direkt zur Steckdose und ein Patchkabel zum HomePlug-Adapter notwendig.

Es ist Aufgabe der Erfindung, die Anzahl der benötigten Kabel und Steckdosen für ein hausinternes PLC-Netzwerk zu reduzieren.

Die Aufgabe wird durch ein eingangs genanntes Netzteil mit den kennzeichnenden Merkmalen des Hauptanspruchs erfüllt.

Überraschend hat sich gezeigt, dass sich herkömmliche Transformatoreinrichtungen und herkömmliche in HomePlug-Adaptern vorhandene HomePlug-Schaltungen in besonders einfacher Weise als integriertes Netzteil kombinieren lassen. Über das erfindungsgemäße integrierte Netzteil wird sowohl die Stromversorgung als auch die Datenübertragung eines Computers ermöglicht. Dazu wird eine HomePlug-Schaltung, wie sie beispielsweise in der der DE 10 2004 058 266 B4 beschrieben ist, in ein Netzteil eingebaut.

Das integrierte Netzteil weist ein Gehäuse mit einem Hausspannungsanschluss auf, der üblicherweise als ein an einem Kabel angeordneter Stecker ausgebildet ist. Der Stecker wird in eine Steckdose eines Hausstromnetzes gesteckt und versorgt somit u. a. das integrierte Netzteil mit Strom. Der Hausspannungsanschluss hat erfindungsgemäß gleichzeitig die Funktion einer Datenschnittstelle, die im Weiteren Hausspannungsschnittstelle genannt wird. Über die Hausspannungsschnittstelle werden die Daten mit dem PLC-Netzwerk ausgetauscht. Hausspannungsschnittstelle und Hausspannungsanschluss werden vorzugsweise durch eine Lötverbindung miteinander verbunden und fallen damit zusammen Günstigerweise ist die HomePlug-Schaltung über die Hausspannungsschnittstelle mit Strom versorgbar. Besonders bevorzugt ist keine weitere separate Stromversorgung der HomePlug-Schaltung vorgesehen.

Das integrierte Netzteil weist vorzugsweise auf der dem Hausspannungsanschluss gegenüberliegenden Gehäuseseite Niedrigspannungsanschlüsse auf, die auf entsprechende Steckkontakte von Stromverbrauchern des Computers wie der CPU, CD-Laufwerken o. ä. steckbar sind.

Die Transformatoreinrichtung ist vorzugsweise als Netzteil ausgebildet. Besonders bevorzugt werden Netzteile in Form von Schaltnetzteilen verwendet, deren Aufbau weiter unten beispielhaft beschrieben wird. Es sind aber auch andere Arten von Transformatoreinrichtungen als Bestandteil der erfindungsgemäßen integrierten Netzteile denkbar.

Üblichweise sind die Netzteilgehäuse mit einem Lüfter versehen, um die Transformatoreinrichtung auch bei längerem Betrieb hineichend zu kühlen und Abwärme abzuführen. Vorzugsweise ist der Lüfter so platziert, dass er sein Kühlstrom im Gehäuse auch über die HomePlug-Schaltung streicht und deren Abwärme mit abführt.

Erfindungsgemäß ist in dem Gehäuse eine HomePlug-Schaltung integriert. Die Hausspannungsschnittstelle der HomePlug-Schaltung entspricht dem Hausspannungsanschluss. Die HomePlug-Schaltung ist zwischen der Hausspannungsschnittstelle und einer Netzwerkschnittstelle geschaltet, die vorzugsweise einen USB- oder RJ45 Stecker aufweist. Die HomePlug-Schaltung wandelt die digitalen Daten in Hochfrequenzsignale um und koppelt die Hochfrequenzsignale mittels OFDM-Modulation in das bzw. aus dem Haustromnetz ein bzw. aus. Der HomePlug-Schaltung realisiert den z. Z. gültigen HomePlug-Standard 1.0.1.

Günstigerweise ist die HomePlug-Schaltung innerhalb des Gehäuses angeordnet. Die HomePlug-Schaltung ist dabei vollständig vorzugsweise in einem metallischen Gehäuse angeordnet, das von der HomePlug-Schaltung abgehende Strahlung verringert.

Überraschenderweise entstehen keine Fehler in der Datenübertragung, obwohl gegenüber dem Stand der Technik zwischen dem Computer und dem Hausspannungsnetz nunmehr nur noch ein einziges Stromkabel verläuft, das gleichzeitig als Datenkabel fungiert. Es ist nicht notwendig, für eine störungsfreie Datenübertragung einen separaten HomePlug-Adapter in eine von der Stromzufuhr unabhängige Steckdose zu stecken sondern, es ist hinreichend, die Hausspannungsschnittstelle der HomePlug-Schaltung direkt, vorzugsweise schon innerhalb des Gehäuses, mit dem Hausspannungsanschluss des Netzteils zu verbinden. Vorteilhafterweise werden ein Stecker und ein Patchkabel gespart. Über den genau einen Stecker wird sowohl die Stromversorgung als auch die Datenübertragung durch vorherige Einkopplung der Hochfrequenzsignale ermöglicht.

Die Netzwerkschnittstelle des integrierten Netzteils weist in einer bevorzugten Ausführungsform der Erfindung einen USB-Stecker auf. Herkömmliche Mainboards von Computern weisen USB-Pfostenstecker entlang ihres Bussystems auf. Es hat sich ebenfalls überraschend gezeigt, dass das einfache Aufstecken der USB-Stecker auf die USB-Pfostenstecker des Mainboards eine einwandfreie Datenübertragung ermöglicht.

Alternativ kann die Netzwerkschnittstelle einen RJ45-Stecker aufweisen, der in einen entsprechenden Port des Mainboards oder eine Netzwerkkarte einsteckbar ist.

Die Erfindung wird anhand eines Ausführungsbeispieles in drei Figuren beschrieben. Dabei zeigen:

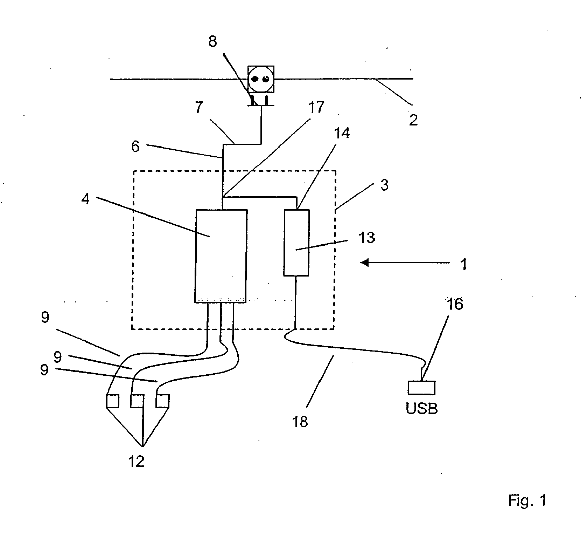

- Fig. 1: eine schematische Darstellung des erfindungsgemäßen integrierten Netzteils,
- Fig. 2: eine Prinzipschaltung eines Schaltnetzteils in der Fig.1,
- Fig. 3: eine Prinzipschaltung einer HomePlug-Schaltung in der Fig.1.

Das integrierte Netzteil 1 ist in einen (nicht eingezeichneten) Computer eingebaut, und es entnimmt einem Hausstromnetz 2 den zur Versorgung von Bauteilen des Computers benötigten Strom. Das erfindungsgemäße integrierte Netzteil 1 weist ein in einem Gehäuse 3 untergebrachtes Schaltnetzteil 4 auf. Das Schaltnetzteil 4 umfasst einen Hausspannungsanschluss 6, der über ein herkömmliches Stromkabel 7 mit einem Stecker 8 an das Hausstromnetz 2 anschließbar ist.

Das Schaltnetzteil 4 transformiert die Mittelspannung des Hausstromnetzes 2 von 100 Volt bis 230 Volt auf eine Niedrigspannung auf etwa 3 Volt bis etwa 12 Volt herab. Auf der dem Hausspannungsanschluss 6 am Gehäuse 3 gegenüberliegenden Seite sind eine Reihe von Niedrigspannungskabeln 9 aus dem Gehäuse 3 herausgeführt, an deren Enden jeweils ein Niedrigspannungsanschluss 12 vorgesehen ist.

Das Schaltnetzteil 4 ist zwischen dem Hausspannungsanschluss 6 und den drei Niedrigspannungsanschlüssen 12 geschaltet. Die Niedrigspannungsanschlüsse 12 dienen der Versorgung der einzelnen (nicht eingezeichneten) Computerbauteile, z. B. der CPU, mit Niedrigspannung, und sie sind auf mit ihnen korrespondierende Steckkontakte der Computerbauteile selbst oder auf mit den Computerbauteilen in Verbindung stehende Pfostenstecker eines Mainboard steckbar.

Innerhalb des Gehäuses 3 ist neben dem Schaltnetzteil 4 eine HomePlug-Schaltung 13 vorgesehen. Die HomePlug-Schaltung 13 ist zwischen einer Hausspannungsschnittstelle 14 und einer Netzwerkschnittstelle 16 geschaltet.

Innerhalb des Gehäuses 3 des integrierten Netzteils 1 ist die Hausspannungsschnittstelle 14 der HomePlug-Schaltung 16 unmittelbar elektrisch leitend mit dem Hausspannungsanschluss 6 des Schaltnetzteils 4 verbunden. Die Verbindung 17 ist hier als Lötverbindung ausgebildet.

Die Netzwerkschnittstelle 16 kann einen USB-Stecker oder RJ45-Stecker aufweisen, die an jeweils einem aus dem Gehäuse 3 herausgeführten Datenkabel 18 angeschlossen sind.

In dem Gehäuse 3 ist ein Lüfter integriert, der neben dem Schaltnetzteil 4 auch die HomePlug-Schaltung 13 während des Betriebs kühlt.

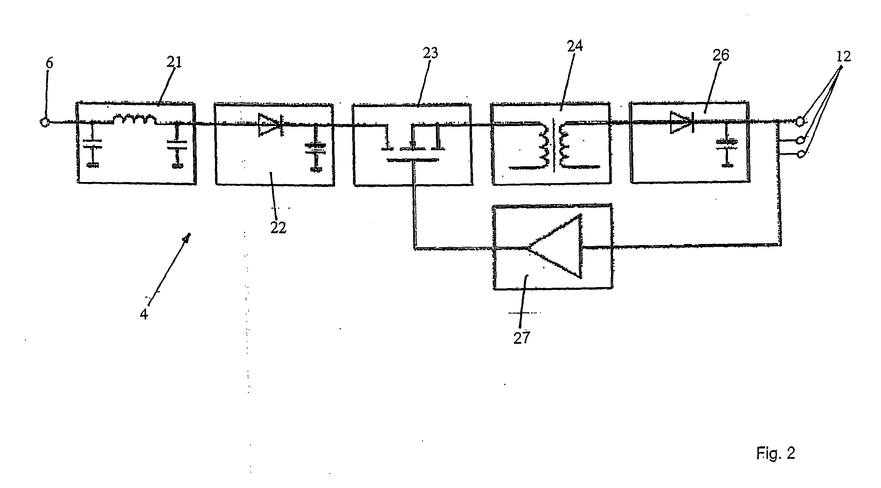

Fig. 2 zeigt den Aufbau eines herkömmlichen Schaltnetzteils. Das Schaltnetzteil besteht aus mehreren Einzelschaltungen. Unmittelbar nach dem Hausspannungsanschluss ist ein in dem Gehäuse 3 angeordneter Filter 21 geschaltet, um die aus dem Hausstromnetz 2 gezogene Netzspannung zu filtern. Durch den Filter 21 werden Überspannungen, Oberwellen und andere Netzstörungen herausgenommen, damit sie die weitere Schaltung nicht gefährden. Dem Filter ist ein erster Gleichrichter 22 nachgeschaltet. Der erste Gleichrichter 22 richtet die 230 Volt Wechselspannung in eine Gleichspannung von etwa 350 Volt um. Mit einer dem ersten Gleichrichter 22 nachgeschalteten Transistorschaltstufe 23 wird aus der Gleichspannung wieder eine Wechselspannung aber diesmal zwischen 35 kHz und 500 kHz erzeugt. Bei derart hohen Frequenzen können auch kleine Transformatoren 24 hohe Leistungen übertragen. Der Transformator 24 kann mehrere Sekundärwicklungen haben, so dass unterschiedliche Spannungen erzeugbar sind. Dem der Transistorschaltstufe 23 nachgeschalteten Transformator 24 folgt ein zweiter Gleichrichter 26, der aus der Wechselspannung eine Gleichspannung in Höhe zwischen 3 Volt und 20 Volt erzeugt. Eine Regelschaltung 27 sorgt dafür, dass die Niedrigspannungen konstant gehalten werden. Der geschlossene Regelkreis sorgt auch dafür, dass das Netzteil 4 immer den geforderten Strom liefert, weil der Strombedarf eines Computers über die Zeit unterschiedlich groß sein kann.

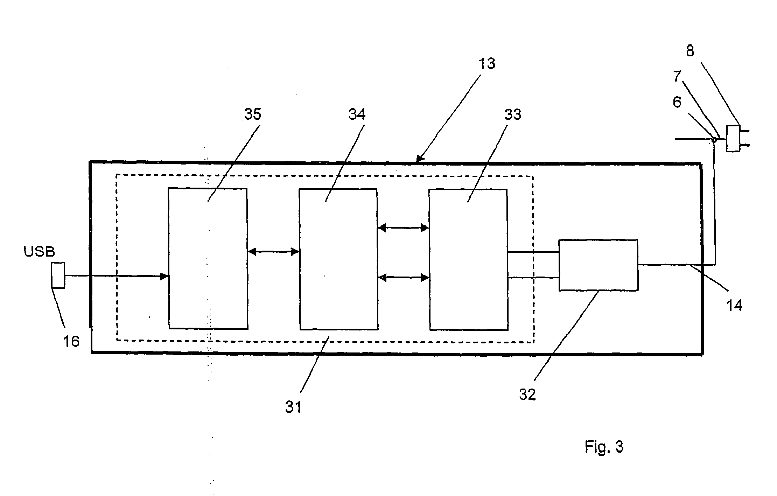

Die Fig. 3 zeigt den zweiten Baustein des erfindungsgemäßen Netzteils, die HomePlug-Schaltung 13. Die HomePlug-Schaltung 13 in Form einer in einen HomePlug-Adapter eingebauten digitalen Schaltung ist z. B. durch die DE 10 2004 058 266 B4 bekannt. Die dort beschriebene HomePlug-Schaltung 13 wird hier verwendet.

Die HomePlug-Schaltung umfasst eine Netzwerkschnittstelle 16, die hier einen außerhalb des Gehäuses 3 angeordneten USB-Stecker aufweist.

Die HomePlug-Schaltung 13 umfasst einen HomePlugChip 31 und einen zwischen dem HomePlugChip 31 und der Hauspannungsschnittstelle 14 geschalteten Koppler 32. Bei dem Koppler 32 handelt es sich um einen Kopplungstransformator zur Ein- und Auskopplung der Hochfrequenzsignale in bzw. aus dem Hausstromnetz. Die Ein- und Auskopplung in das Hausstromnetz erfolgt bei dieser Ausführungsform der Erfindung über eine Verbindung 6 an den Hausspannungsanschluss 7 des Schaltnetzteils 4 und über den Stecker 8, der in eine Steckdose des Hausstromnetzes 2 gesteckt wird.

Bei dem HomePlugChip 31 handelt es sich um eine integrierte Schaltung, die die Funktionen des derzeit gültigen HomePlug-Standards 1.0.1 realisiert. Der HomePlugChip 31 gliedert sich in ein analoges, mit dem Koppler 32 verbundenes Frontend 33, das einen Bandpassfilter, einen digital/analog- und analog/digital-Wandler sowie einen Verstärker umfasst. Die Ansteuerung der an das Hausstromnetz angeschlossenen Netzwerkhosts bewirkt der HomePlug MAC/PHY 34. Dem HomePlug MAC/PHY 34 ist ein Host Interface 35 nachgeschaltet, das die Kommunikation der USB-Schnittstelle 16 steuert.

Der USB-Stecker 16 ist mit dem Bussystem eines herkömmlichen Mainboards verbindbar. Herkömmliche Mainboards weisen USB-Pfostenstecker auf Ihrer Platine auf, auf die der USB-Stecker 16 des integrierten Netzteils 1 gesteckt wird, um den Datenaustausch zu ermöglichen.

Alternativ kann die Netzwerkschnittstelle 16 einen RJ45-Stecker aufweisen, der auf die Ethernetschnittstelle des Mainboards steckbar ist.

### Bezugszeichenliste:

- 1: integriertes Netzteil
- 2: Hausstromnetz
- 3: Gehäuse
- 4: Schaltnetzteil
- 5: -
- 6: Hausspannungsanschluss
- 7: Stromkabel
- 8: Stecker
- 9: Niedrigspannungskabeln
- 10: -
- 11: -
- 12: Niedrigspannungsanschluss
- 13: HomePlug-Schaltung
- 14: Hauspannungsschnittstelle
- 15: -
- 16: Netzwerkschnittstelle
- 17: Verbindung
- 18: Datenkabel
- 19: -
- 20: -
- 21: Filter
- 22: Gleichrichter
- 23: Transistorschaltstufe
- 24: Transformator
- 25: -
- 26: Gleichrichter
- 27: Regelschaltung
- 28: -
- 29: -
- 30: -
- 31: HomePlugChip
- 32: Koppler
- 33: Frontend

- 34: HomePlug MAC/PHY
- 35: Host Interface

## Patentansprüche

1. Integriertes Netzteil (1) zum Einbau in einen Computer
mit einem Gehäuse (3) und mit einem Hausspannungsanschluss (6) und mit wenigstens einem Niedrigspannungsanschluss (12) für Bauteile des Computers und
einer zwischen dem Hausspannungsanschluss (6) und dem wenigstens einen Niedrigspannungsanschluss (12) in dem Gehäuse (3) geschalteten Transformatoreinrichtung,
**gekennzeichnet durch** eine im Gehäuse (3) angeordnete und zwischen einer Hausspannungsschnittstelle (14) und einer Netzwerkschnittstelle (16) geschalteten HomePlug-Schaltung (13) und **dadurch**, dass die Hausspannungsschnittstelle (14) unmittelbar mit dem Hausspannungsanschluss (6) elektrisch leitend verbunden ist und die Netzwerkschnittstelle (16) außerhalb des Gehäuses (3) angeordnet ist.

2. Integriertes Netzteil nach Anspruch 1,
**dadurch gekennzeichnet, dass** die HomePlug-Schaltung (13) über die Hausspannungsschnittstelle (14) mit Strom versorgbar ist.

3. Integriertes Netzteil nach Anspruch 1 oder 2,
**dadurch gekennzeichnet, dass** die HomePlug-Schaltung (13) innerhalb des Gehäuses (3) angeordnet ist.

4. Integriertes Netzteil nach Anspruch 1, 2 oder 3,
**dadurch gekennzeichnet, dass** die Transformatoreinrichtung (24) ein Schaltnetzteil (4) umfasst.

5. Integriertes Netzteil nach wenigstens einem der vorstehenden Ansprüche,
**dadurch gekennzeichnet, dass** die HomePlug-Schaltung (13) einen zwischen einem Koppler und der Netzwerkschnittstelle geschalteten HomePlugChip (31) aufweist.

6. Integriertes Netzteil nach wenigstens einem der vorstehenden Ansprüche,
**dadurch gekennzeichnet, dass** die Netzwerkschnittstelle (16) einen an einem Kabel angeordneten USB-Stecker (16) aufweist und der USB-Stecker (16) auf einen USB Steckkontakt eines Mainboards steckbar ist.

7. Netzteil nach wenigstens einem der vorstehenden Ansprüche,
**dadurch gekennzeichnet, dass** die Netzwerkschnittstelle (16) einen an einem Kabel (7) angeschlossenen RJ45-Stecker aufweist, der auf einen RJ45 Steckkontakt einer im Computer vorgesehen Netzwerkkarte steckbar ist.

8. Integriertes Netzteil nach wenigstens einem der vorstehenden Ansprüche, **gekennzeichnet durch** einen im Gehäuse (3) vorgesehenen Lüfter, der einen Kühlluftstrom erzeugt, der an der HomePlug-Schaltung (13) vorbei streicht.
